# EUROPÄISCHE PATENTANMELDUNG

(11) **EP 3 441 524 A1**
(43) Veröffentlichungstag der Anmeldung: **13.02.2019**
(21) Anmeldenummer: 17185997.8
(22) Anmeldetag: 11.08.2017
(51) Int. Cl.: E01B 23/02, B25J 5/02

(54) **TRAGSCHIENE FÜR EINE TRANSLATIV VERFAHRBARE ROBOTERPLATTFORM**

(71) Anmelder: IPR-Intelligente Peripherien für Roboter GmbH, 75031 Eppingen (DE)
(72) Erfinder: Doll, Fredy, 77855 Achern (DE); Kollmar, Thomas, 74223 Flein (DE)
(74) Vertreter: Patentanwaltskanzlei Cartagena

(57) **Zusammenfassung**

Die Erfindung betrifft eine Tragschiene (10) für eine translativ verfahrbare Roboterplattform (120). Diese Tragschiene (10) ist in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene (42) zur Führung der Roboterplattform (120) ausgebildet. Sie weist in einem nach unten weisenden Teilabschnitt mindestens einen unteren metallischen Anschlussflansch (30) zur Befestigung der Tragschiene (10) auf einem Untergrund wie einem Hallenboden oder an einer Portalbasis (200) und in einem nach oben weisenden Teilabschnitt an einer Außenseite mindestens einen oberen metallischen Anschlussflansch (40) zur Anbringung der metallischen Führungsschiene und/oder unmittelbar die mindestens eine metallische Führungsschiene (42) auf.

Es wird vorgeschlagen, die Tragschiene (10) mit einer Tragstruktur (20) aus Beton auszugestalten. Weiterhin wird vorgeschlagen, dass die Tragschiene (10) über eine in die Tragstruktur (20) aus Beton eingebettete metallische Zugstruktur (70) verfügt, die in Haupterstreckungsrichtung (A) unter Zugspannung steht.

## Beschreibung

### ANWENDUNGSGEBIET UND STAND DER TECHNIK

Die Erfindung betrifft eine Tragschiene für eine translativ verfahrbare Roboterplattform nach dem Oberbegriff von Anspruch 1 und eine Portalbasis für ein Robotersystem nach dem Oberbegriff von Anspruch 8. Die Erfindung betrifft weiterhin ein Verfahrsystem mit einer solchen Tragschiene mitsamt Roboterplattform sowie ein Robotersystem mit einer solchen Tragschiene. Darüber hinaus betrifft die Erfindung Verfahren zur Herstellung einer erfindungsgemäßen Tragschiene.

Gattungsbildende Tragschienen sind aus dem Stand der Technik allgemein bekannt. Diese Tragschienen, die mitunter auch als siebte Achse oder Fahrachse bezeichnet werden, dienen dem Zweck, mittels der darauf translativ verfahrbar angebrachten Roboterplattform einen herkömmlichen Industrieroboter horizontal translativ zu verfahren. Den Bedarf hierfür gibt es in vielen industriellen Anwendungsfeldern, beispielsweise in der Fertigung, wenn der Roboter an verschiedenen Stellen eingesetzt werden soll, oder in Fällen, in denen der Roboter bestimmungsgemäß selbst ein Werkstücklager anfahren können soll, um dort ein zu verbauendes Werkstück zu ergreifen.

Gattungsgemäße Tragschienen werden üblicherweise mittels eines bodenseitigen Anschlussflansches auf einem Untergrund befestigt, insbesondere auf einem Hallenboden oder an einer Portalbasis, mittels derer die Tragschienen deutlich über einem Hallenboden und vorzugsweise in einer Höhe von mindestens 1,50 m positioniert werden. An ihrer Oberseite weisen gattungsgemäße Tragschienen üblicherweise zwei zueinander beabstandete parallel verlaufende Führungsschienen auf, auf denen Räder der verfahrbaren Roboterplattform abrollen.

Bekannte Tragschienen sind als vollständig metallische Tragschienen, meist aus Aluminium oder Stahl, ausgebildet. Dies führt zu einem vergleichsweise hohen Preis der Tragschienen.

Eine gattungsgemäße Portalbasis dient dem Zweck, eine gattungsgemäße Tragschiene in einer erhobenen Stellung vorzusehen, vorzugweise mindestens 1,50 m oberhalb eines Hattenbodens. Unterhalb der Tragschiene und des hieran verfahrbaren Roboters bleibt somit Raum, beispielsweise für weitere Maschinen. Auch kann die Verwendung einer solchen Portalbauweise geboten sein, wenn die durch den Roboter durchzuführenden Arbeitsschritte idealerweise von oben durchgeführt werden.

### AUFGABE UND LÖSUNG

Aufgabe der Erfindung ist es, insbesondere für die Anwendung bei einem Robotersystem in Portalbauweise, eine vergleichsweise günstige und technisch vorteilhafte Bauart einer Tragschiene, insbesondere zur Verwendung an einer Portalbasis, und eine günstige und technisch vorteilhafte Bauart einer Portatbasis zur Verfügung zu stellen.

Erfindungsgemäß wird eine Tragschiene für eine translativ verfahrbare Roboterplattform vorgeschlagen. Diese ist in bekannter Weise in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene zur Führung der Roboterplattform ausgebildet. In einem nach unten weisenden Teilabschnitt weist die Tragschiene mindestens einen unteren metallischen Anschlussflansch zur Befestigung der Tragschiene auf einem Untergrund wie einem Hallenboden oder an einer Portalbasis auf. Gegenüberliegend dazu weist die Tragschiene in einem nach oben weisenden Teilabschnitt an einer Außenseite mindestens einen oberen metallischen Anschlussflansch zur Anbringung der metallischen Führungsschiene und/oder unmittelbar die mindestens eine metallische Führungsschiene auf.

"Unten" und "Oben" ist in diesem Kontext auf das Koordinatensystem der Tragschiene bezogen und bedeutet nicht zwingend, dass der untere Anschlussflansch zum Boden hin ausgerichtet sein muss, sondern in Richtung einer Anbringungsfläche, die zwar meist eine horizontale Bodenfläche ist, beispielsweise jedoch auch eine Portalbasis sein kann, an der die Tragschiene mit zur Seite oder gar nach oben weisenden unterem Anschlussflansch festgelegt sein kann.

Erfindungsgemäß ist bei einer Tragschiene der beschriebenen Art vorgesehen, dass diese über eine Tragstruktur aus Beton verfügt. In diese Tragstruktur aus Beton eingebettet ist eine metallische Zugstruktur vorgesehen, die in Haupterstreckungsrichtung unter Zugspannung steht. Die Zugstruktur erstreckt sich über zumindest 60% der Länge der Tragstruktur, vorzugsweise über zumindest 80%.

Die in die Tragstruktur eingebettete metallische Zugstruktur hat sich als sehr vorteilhaft herausgestellt, um zu verhindern, dass eine entlang der Tragschiene verfahrbare Roboterplattform aufgrund ihrer Last zu einer inakzeptabel großen Durchbiegung führt. Während bei einer unmittelbar bodenseitig vorgesehenen Tragschiene durch Bodenplatten in geringem Abstand eine solche Durchbiegung meist nicht zu befürchten ist, ist bei der Verwendung von Tragschienen auf einer Portalbasis üblicherweise ein erheblich größerer Abstand zwischen Abstützungen, wie beispielsweise Säulen der Portalbasis vorgesehen, so dass hier die genannte Gefahr der Durchbiegung unter Last groß ist. Je länger die Tragschiene bzw. der Abstand ihrer Abstützungen ist, desto zweckmäßiger ist die Verwendung einer metallischen Zugstruktur. Eine erfindungsgemäße Tragschiene weist vorzugsweise eine Länge von mindestens 3 m in Haupterstreckungsrichtung auf, insbesondere zwischen 4 m und 8 m, insbesondere vorzugsweise in etwa von 6 m. Insbesondere vorzugsweise ist die Tragschiene nur an den beiden gegenüberliegenden Enden abgestützt, insbesondere durch die Säulen einer Portalbasis.

Durch eine unter Zugspannung stehende Zugstruktur wird eine solche Verformung jedoch deutlich verringert. Die von außen auf die Tragschiene wirkenden Kräfte werden entweder durch direkte metallische Verbindung der Innenstruktur mit den Anschlussflanschen der Tragschiene oder über den Tragkörper aus Beton in die Zugstruktur eingeleitet. Die Tragstruktur aus Beton selbst und/oder ein anderer Teil der Tragschiene stehen unter einer Druckspannung. Auch diese Druckspannung ist es, die die Durchbiegung der Tragschiene verringert. Die Druckspannung, die von der Zugstruktur in den Beton eingeleitet wird, ist vorzugsweise ausreichend stark, als dass unter normalen Belastungen der Beton stets auf Druck belastet bleibt und nicht unter Zugspannung gerät.

Weiterhin ist eine Gestaltung möglich, bei der die Tragschiene zusätzlich über eine in Haupterstreckungsrichtung unter Druckspannung stehende metallische Druckstruktur aufweist. Dabei ist es besonders bevorzugt, wenn die Druckstruktur eine Außenflächen der Tragschiene bildende Außenstruktur aufweist, die insbesondere vorzugsweise durch ein Hohlprofil gebildet wird.

Bei einer solchen Gestaltung besteht eine metallische Verbindung zwischen der Druckstruktur und der Zugstruktur, so dass die Zugkräfte an der Zugstruktur von den Druckkräften an der Druckstrukturzumindest teilweise ausgeglichen werden. Diese metallische Verbindung ist vorzugweise an den beiden gegenüberliegenden Enden der Tragschiene vorgesehen. Die Druckstruktur kann vorzugweise in Form des genannten Hohlprofils vorliegen, jedoch stattdessen auch in Form einer in die Tragstruktur eingebetteten Druckstruktur. Die als Druckstruktur agierende Außenstruktur in Form eines Hohlprofils bildet durch ihre gegenüberliegenden Enden quasi Ankerpunkte für die Zugstruktur.

Ein wesentlicher Vorteil einer solchen Gestaltung mit Druckstruktur liegt darin, dass im Zuge der Herstellung die noch unfertige Tragschiene nicht in einem Herstellungswerkzeug zu verbleiben hat, bis der Beton ausreichend ausgehärtet ist, um die durch die Zugstruktur eingekoppelten Druckkräfte aushalten zu können.

Es sind hiervon Gestaltungen umfasst, bei denen die vorzugsweise endseitige metallische Verbindung der metallischen Zugstruktur und der metallischen Druckstruktur dauerhaft vorgesehen ist. Alternativ kann jedoch auch vorgesehen sein, dass die Verbindung zwischen der innenliegenden Zugstruktur und der Druckstruktur nur zwischenzeitlich und bei einem Zwischenprodukt im Zuge der Herstellung besteht, so dass das Aushärten des Betons außerhalb eines die Zugspannung aufrechterhaltenden Werkzeuges stattfinden kann. Nach Aushärtung kann die Verbindung dann entfernt werden, so dass hierdurch der ausgehärtete Beton unter Druckspannung gesetzt wird.

Die Zugstruktur kann durch einfache in Haupterstreckungsrichtung eingelegte Stangen einheitlichen Querschnitts gebildet sein, die alleine kraftschlüssig durch die Haftung des Betons an der Außenseite der Stangen ihre Spannung aufrechterhalten.

Von Vorteil ist jedoch eine Gestaltung, bei der die Zugstruktur derart ausgebildet ist, dass sie quer zur Haupterstreckungsrichtung und in Bezug auf die Haupterstreckungsrichtung formschlüssig mit der Tragstruktur aus Beton zusammenwirkt. Die Bereiche des formschlüssigen Zusammenwirkens der Tragstruktur und der Zugstruktur bilden quasi Ankerpunkte für die Zugstruktur. Eine Möglichkeit hierfür liegt darin, dass die Zugstruktur beidseitig endseitig mit quer zur Haupterstreckungsrichtung erstreckten Druckplatten verbunden sein kann. Alternativ oder zusätzlich kann die Zugstruktur bezogen auf die Haupterstreckungsrichtung einen variablen Querschnitt aufweisen, beispielsweise durch angeschweißte Querstreben oder andere eine Ankerwirkung entfaltende Formgebungen.

Die Tragstruktur einer erfindungsgemäßen Tragschiene besteht aus Beton. Es hat sich gezeigt, dass Beton sehr vorteilhafte Eigenschaften, insbesondere Dämpfungseigenschaften aufweist. Um geringe Anforderungen an die Komplexität der Herstellung zu haben, kann normaler Baubeton / Zementbeton Verwendung finden. Je nach Anforderungen kann es jedoch auch von Vorteil sein, Polymerbeton zu verwenden. Durch zusätzliche Einbringung eines Fasermaterials, beispielsweise in Form von Netzen oder Matten, kann die Stabilität zusätzlich erhöht werden. Es handelt sich in diesem Fall um eine Tragstruktur aus Textilbeton.

Die Erfindung betrifft weiterhin auch ein Verfahrsystem für einen Roboter mit einer Tragschiene mit mindestens einer daran vorgesehenen Führungsschiene sowie eine Roboterplattform, die entlang der Tragschiene verfahrbar ist. Dabei ist die Tragschiene nach oben beschriebener Art ausgebildet. Weiterhin betrifft die Erfindung auch eine Portalbasis eines Robotersystems zur Anbringung einer Tragschiene für eine translativ verfahrbare Roboterplattform. Diese Portalbasis verfügt über eine Mehrzahl von vertikal erstreckten Portalsäulen. Diese weisen jeweils mindestens einen unteren metallischen Anschlussflansch zur Befestigung der Portalsäulen auf einem Untergrund wie einem Hallenboden und mindestens einen oberen Anschlussflansche zur Anbringung einer horizontal erstreckten Tragschiene für eine translativ verfahrbare Roboterplattform auf.

Erfindungsgemäß ist vorgesehen, dass mindestens eine der Portalsäulen über eine metallische Außenstruktur verfügt, die durch ein metallisches Hohlprofil gebildet ist. Ein von diesem Hohlprofil umgebener Innenbereich ist zumindest zum überwiegenden Teil mit Beton gefüllt. Weiterhin ist in den Beton im Innenbereich eine metallische Innenstruktur eingebettet.

Eine solche Portalsäule mit einer metallischen Innenstruktur, die in den Beton eingebettet ist, hat sich als vorteilhaft in Hinblick auf Dämpfungseigenschaften und Stabilität erwiesen. Die Innenstruktur gestattet es zudem, ein Hohlprofil mit vergleichsweise geringer Wandungsdicke zu verwenden, beispielsweise maximal 12 mm oder maximal 8 mm. Die metallische Innenstruktur erstreckt sich vorzugsweise mindestens über 60% der Länge des Hohlprofils, insbesondere über mindestens 80% der Länge.

Die metallische Innenstruktur kann vollständig in den Beton eingebettet sein, so dass jede Kraftübertragung von außen auf die Innenstruktur über den Beton erfolgt. Alternativ ist es jedoch auch eine Gestaltung möglich, bei der die metallische Innenstruktur mit dem Hohlprofil unmittelbar verbunden ist, vorzugsweise über eine Schweißverbindung oder eine Schraubverbindung.

Im Falle einer Gestaltung mit einzig in den Beton eingelegter und hiervon vollständig eingebetteter Innenstruktur erfolgt die Herstellung, indem die Innenstruktur zeitweise und vorzugsweise endseitig relativ zum Hohlprofil lagefixiert ist, während der Beton in das Hohlprofil eingefüllt wird, um dort auszuhärten. Bei einer unmittelbaren Verbindung kann auf diese Form temporärer Lagefixierung verzichtet werden.

Die metallische Innenstruktur kann mindestens ein in Haupterstreckungsrichtung ausgerichtetes Längssegment und eine Mehrzahl von sich in Querrichtung über das Längssegment erhebende Quersegmente aufweisen. Sie kann auch eine Mehrzahl von in Haupterstreckungsrichtung ausgerichteten Längssegmenten aufweisen, die miteinander über Quersegmente verbunden sind. Eine derartige Innenstruktur mit komplexer und vorzugsweise käfigartiger Geometrie verbessert die Eigenschaften einer erfindungsgemäß ausgestalteten Portalsäule.

Die Erfindung betrifft darüber hinaus auch ein Robotersystem mit einer Portalbasis der beschriebenen Art und/oder einer durch die Portalbasis getragenen horizontalen Tragschiene der beschriebenen Art. Das Robotersystem umfasst vorzugsweise einen auf der Roboterplattform angebrachten Roboter.

Die Erfindung betrifft weiterhin Verfahren zur Herstellung einer Tragschiene des beschriebenen Typs.

Bei einer ersten Variante des Verfahrens zur Herstellung einer Tragschiene oben beschriebener Art ist vorgesehen, dass mindestens ein unterer metallischer Anschlussflansch und mindestens ein oberer metallischer Anschlussflansch bzw. eine Führungsschiene in eine Schalung eingelegt oder auf die Schaltung aufgelegt werden. Weiterhin wird eine Zugstruktur in die Schalung eingelegt und endseitig ortsfest zu Wandungen der Schalung festgelegt, so dass sie unter einer in Haupterstreckungsrichtung der Schalung wirkenden Zugspannung steht. Dann wird die Schalung mit Beton ausgegossen, so dass hierdurch die Tragstruktur gebildet wird, wobei die Zugstruktur unter Zugspannung stehend in den Beton der Tragstruktur eingebettet wird. Nach zumindest partiellem Aushärten des Betons der Tragstruktur wird die hierdurch hergestellte Tragschiene aus der Schalung entnommen, wobei die Zugspannung in der Zugstruktur zumindest teilweise erhalten bleibt.

Bei einem solchen Verfahren ist demnach vorgesehen, dass der Beton partiell oder vollständig aushärtet, bevor die durch das Werkzeug aufgebrachte externe Zugkraft entfernt wird und sich somit insbesondere über ankerartig auf die Tragstruktur wirkende Formgebung der Zugstruktur eine Druckspannung im Beton einstellt, um die gegengerichtete Zugspannung in der Zugstruktur aufrecht zu erhalten.

Bei einem alternativen Verfahren zur Herstellung einer Tragschiene der beschriebenen Art ist vorgesehen, dass eine kombinierte metallische Zug- und Druckstruktur erstellt wird, die mindestens ein in einer Haupterstreckungsrichtung unter Zug stehenden Strukturabschnitt sowie mindestens einen in Haupterstreckungsrichtung unter Druck stehenden Strukturabschnitt aufweist. Anschließend wird eine Tragstruktur aus Beton gegossen, in der zumindest der unter Zug stehende Strukturabschnitt eingebettet ist.

Dieses Verfahren gestattet es, nach dem Gießen der Tragstruktur die aufgrund noch nicht ausgehärteten Betons noch unfertige Tragschiene vergleichsweise früh aus dem Werkzeug zu entnehmen, da die Tragschiene durch die Druckstruktur die Zugspannung in der Zugstruktur selbsttätig aufrecht erhalten kann.

Bei einer besonderen Variante des Verfahrens ist vorgesehen, dass nach zumindest partiellem Aushärten des Betons der Tragstruktur eine Trennung der Zugstruktur von der Druckstruktur erfolgt, wobei die Zugspannung in der Zugstruktur zumindest teilweise erhalten bleibt. Bei einem solchen Vorgehen stützt die Druckstruktur lediglich im Rahmen der Herstellung die in der Zugstruktur vorhandene Zugspannung. Sobald der Beton ausreichend ausgehärtet ist, erfolgt die genannte Trennung, so dass damit der Beton unter Druckspannung gesetzt wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein Robotersystem unter Verwendung einer erfindungsgemäßen Tragschiene.
Fig. 2 zeigt die Tragschiene des Robotersystems mitsamt Anbauteilen.
Fig. 3A und 3B verdeutlichen eine erste Möglichkeit zum Aufbau einer Tragschiene entsprechend Fig. 2.
Fig. 4A und 4B verdeutlichen eine zweite Möglichkeit zum Aufbau einer Tragschiene entsprechend Fig. 2.
Fig. 5A und 5B verdeutlichen eine dritte Möglichkeit zum Aufbau einer Tragschiene entsprechend Fig. 2.
Fig. 6A bis 6D verdeutlichen exemplarisch die Herstellung einer Tragschiene entsprechend Fig. 2 in verschiedenen Stadien der Herstellung.
Fig. 7 zeigt einen Aufbau einer Tragschiene in Portalbauweise, umfassend eine Portalbasis mit einer Mehrzahl von Portalsäulen.
Fig. 8 und 9 verdeutlichen verschiedene Möglichkeiten, eine Tragschiene an der Portalbasis zu befestigen.

### DETAILLIERTE BESCHREIBUNG DER AUSFÜHRUNGSBEISPIELE

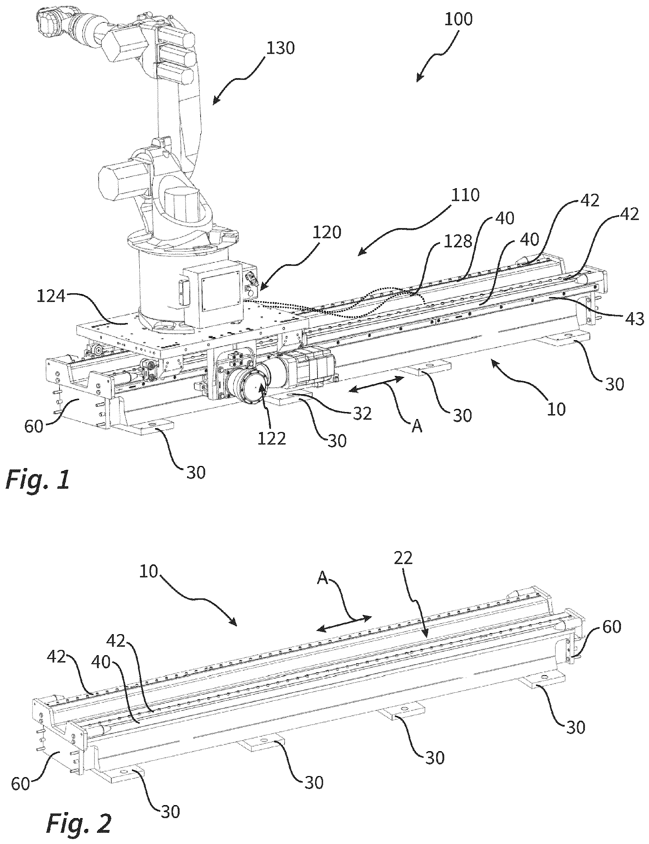

Fig. 1 und 2 zeigt ein erfindungsgemäßes Robotersystem 100, welches insbesondere im Rahmen der Fertigung eingesetzt werden kann, sowie dessen Tragschiene 10 in isolierter Ansicht.

Das Robotersystem 100 verfügt über ein Verfahrsystem 110, umfassend die genannte horizontal ausgerichtete Tragschiene 10 und eine auf dieser Tragschiene 10 in Haupterstreckungsrichtung A der Tragschiene 10 verfahrbare Plattform 120. Die Tragschiene 10, die nochmals separat in Fig. 2 dargestellt ist, weist an ihrer Unterseite Anschlussflansche 30 in Form von Bodenplatten auf, die mit Bohrungen 32 versehen sind, um auf einem Untergrund, insbesondere einem Hallenboden oder einer hierfür vorgesehenen Portalbasis, sicher befestigt zu werden. An der Oberseite der Tragschiene 10 sind zwei parallele, voneinander beabstandete Anschlussflansche 40 vorgesehen, an denen jeweils eine Führungsschiene 42 festgeschraubt ist. Auf diesen Führungsschienen kann die Plattform 120 verfahren werden, wobei sie hierfür über Rollen verfügt. Der Antrieb erfolgt über einen Motor 122, der ein nicht dargestelltes Ritzel antreibt, welches mit einer Zahnstange der Tragschiene 10 zusammenwirkt. Endseitig sind an der Tragschiene 10 jeweils Endanschläge vorgesehen, um die Beweglichkeit der Plattform 120 zu limitieren. Auf der Oberseite 124 der Plattform 120 ist ein Industrieroboter 130 mit mehrachsig verschwenkbarem Roboterarm vorgesehen.

Durch die Anbringung des Industrieroboters 130 auf der Plattform 120 gewinnt der Roboter einen weiteren Freiheitsgrad, der beispielsweise genutzt werden kann, um weiter voneinander beabstandete Bearbeitungsorte zu erreichen oder ein Lager anzufahren, um von hier Bauteile zu holen.

Für die Versorgung der Plattform 120 und des Industrieroboters 130 ist ein gestrichelt dargestellter Leitungsstrang 128 vorgesehen, der in einer wannenartigen Mulde 22 zwischen den Führungsschienen 42 aufgenommen ist.

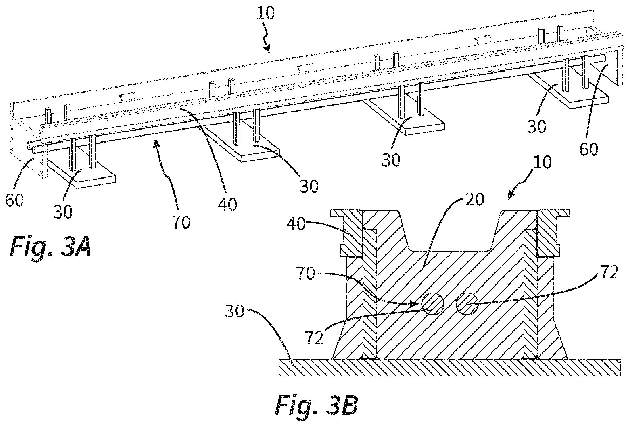

Die Fig. 3A und 3B verdeutlichen für eine erste Variante einer Tragschiene den inneren Aufbau. In Fig. 3A ist zur Verdeutlichung die Tragstruktur 20 aus Beton ausgeblendet. Es ist zu ersehen, dass in die Tragstruktur 20 eine Zugstruktur 70 eingebettet ist, die vorliegend exemplarisch durch zwei Zugstangen 72 gebildet wird. Diese Zugstangen 72 sind endseitig an den als Anker für die Verspannung dienenden Druckplatten 60 befestigt, beispielsweise angeschraubt oder angeschweißt. Die beiden Zugstangen 72 stehen unter Zugspannung und leiten über die Druckplatten 60 eine korrespondierende Druckkraft in die Tragstruktur 20 aus Beton ein. Hierdurch wird eine erhöhte Stabilität der Tragschiene gegen Durchbiegungen erreicht, wie sie insbesondere im Falle einer Verwendung in einem Robotersystem nach Portalbauweise zu befürchten sind. Zwar könnte alternativ diese erhöhte Stabilität auch durch einen größeren Querschnitt der Tragstruktur 20 erzielt werden. Da bestimmungsgemäß jedoch vorgesehen ist, dass die Tragschienen der erfindungsgemäßen Art regelmäßig aus Metall, insbesondere Aluminium hergestellte Tragschienen ersetzen, ist es gewünscht, dass die Bauform der Tragschiene 10 ein möglichst ähnliches Volumen hat. Durch die Zugstruktur 70 ist dies zu erreichen.

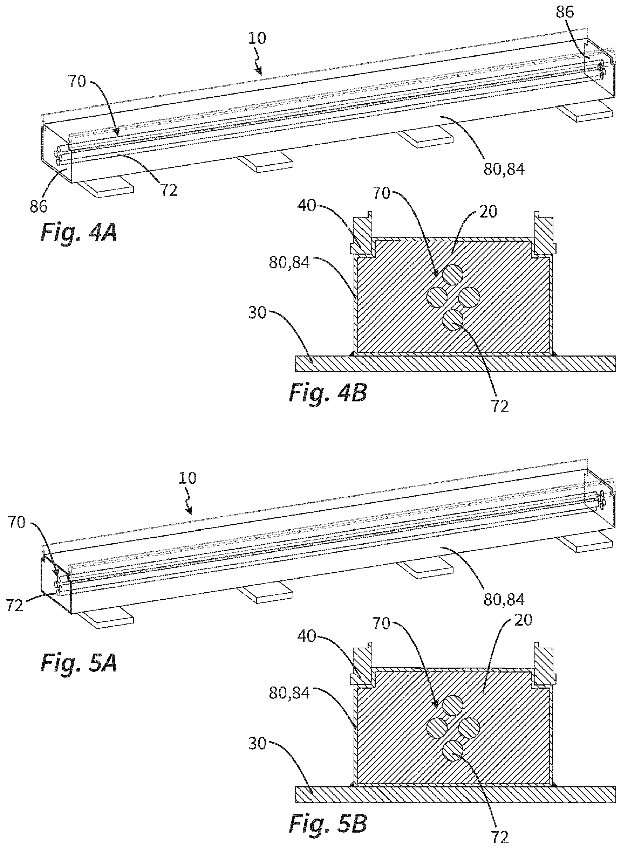

Die Fig. 4A und 4B zeigen eine zweite Ausgestaltung einer erfindungsgemäßen Tragschiene 10. Diese weist die Besonderheit auf, dass sie außenseitig durch ein metallisches Hohlprofil, beispielsweise aus Aluminium oder Stahl, gebildet wird, welches beidseitig endseitig durch metallische Stirnflächen 86 verschlossen ist. Wiederum ist eine Zugstruktur 70 vorgesehen, die aus Zugstangen 72 besteht, welche innenseitig an den Stirnseiten 86 angeschweißt oder angeschraubt sind.

Hierdurch wird bewirkt, dass die in der Zugstruktur 70 herrschende Zugspannung nicht vollständig und gegebenenfalls nicht einmal überwiegend durch die Tragstruktur 20 aus Beton aufgenommen werden muss, sondern durch das Hohlprofil 84 aufgenommen werden kann. Dies ist bei der Herstellung von Vorteil, da kein externes Werkzeug blockiert wird, welches die Zugspannung aufrechterhält. Stattdessen kann die Tragschiene mit ihren Stirnflächen 86 dies eigenständig.

Bei der Gestaltung gemäß der Fig. 4A und 4B ist vorgesehen, dass die Stirnflächen 86 dauerhaft erhalten bleiben und somit zumindest ein Teil der Druckspannung zur Kompensation der Zugspannung in der Zugstruktur 70 dauerhaft vom Hohlprofil 84 zur Verfügung gestellt wird.

Bei der alternativen Gestaltung gemäß der Fig. 5A und 5B ist der grundsätzliche Aufbau identisch. Allerdings sind hier keine Stirnflächen 86 vorgesehen, so dass keine metallische Verbindung zwischen der Zugstruktur 72 und dem Hohlprofil 84 vorhanden ist. Dies bedeutet, dass die Zugspannung der Zugstruktur 70 in die Tragstruktur 20 aus Beton eingeleitet wird. Auch bei einer Gestaltung gemäß den Fig. 5A und 5B ist jedoch von Vorteil, wenn sie in gleicher Art und Weise wie die Gestaltung der Fig. 4A und 4B hergestellt wird, indem zum Zeitpunkt der Herstellung eine metallische Verbindung zwischen den Enden des Hohlprofils 84 und den Enden der Zugstangen der Zugstruktur 70 besteht. Erst nach dem Aushärten des Betons der Tragstruktur 20 wird diese metallische Verbindung durch Trennen der Verbindung gelöst, so dass in diesem Augenblick die Tragstruktur 20 aus Beton unter Druck gesetzt wird.

In den Fig. 5A und 5B ist die Zugstruktur derart dargestellt, dass sie aus rein zylindrischen Metallstangen 72 besteht. Abweichend hiervon kann jedoch auch vorgesehen sein, dass die Stangen 72 mit quer zu ihrer Erstreckungsrichtung ausgerichteten Verdickungen versehen sind, die formschlüssig in die Tragstruktur eingreifen und hierdurch Ankerpunkte für die Zugstangen 72 schaffen.

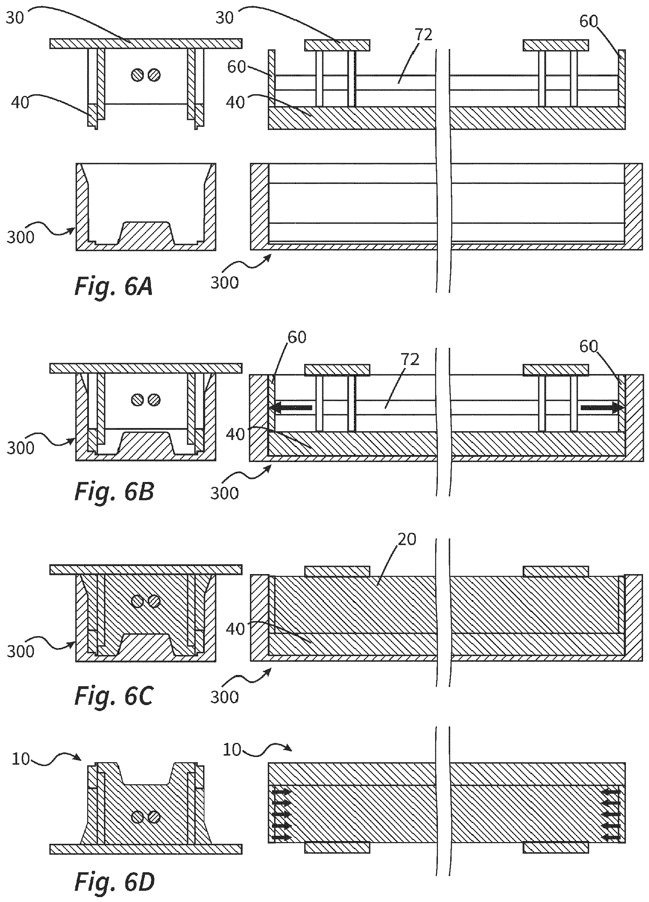

Anhand der Fig. 6A bis 6E wird exemplarisch und schematisch das Fertigungsverfahren zur Herstellung der Tragschiene gemäß den Fig. 3A und 3B erläutert.

Ausgangspunkt des Verfahrens ist eine Schalung 300, dargestellt in Fig. 6A, in die in der Fig. 6B verdeutlichten Weise ein mehrteiliges Metallgerüst eingelegt wird, welches unter anderem die unteren Anschlussflansche 30 und die oberen Anschlussflansche 40 sowie Verbindungsstreben dazwischen umfasst. Darüber hinaus umfasst das Metallgerüst die beiden Druckplatten 60, die durch die Zugstangen 72 miteinander verbunden sind.

In der durch die Pfeile der Fig. 6B verdeutlichten Weise werden die Druckplatten durch eine werkzeugseitig aufgebrachte Zugkraft nach außen gezogen, so dass die gewünschte Zugspannung in den Zugstangen 72 aufgebaut wird. In diesem Zustand wird dann die Tragstruktur 20 durch Zuführen von Beton gegossen, so dass die Tragstruktur 20 entsprechend der Fig. 6C entsteht.

Sobald der Beton ausgehärtet ist, wird die Tragschiene 10 aus der Schalung 300 entfernt. Die in den Zugstangen 72 bestehende Zugspannung sorgt in der in Fig. 6D durch die Pfeile verdeutlichten Art und Weise zu einer Druckspannung in der Tragstruktur 20.

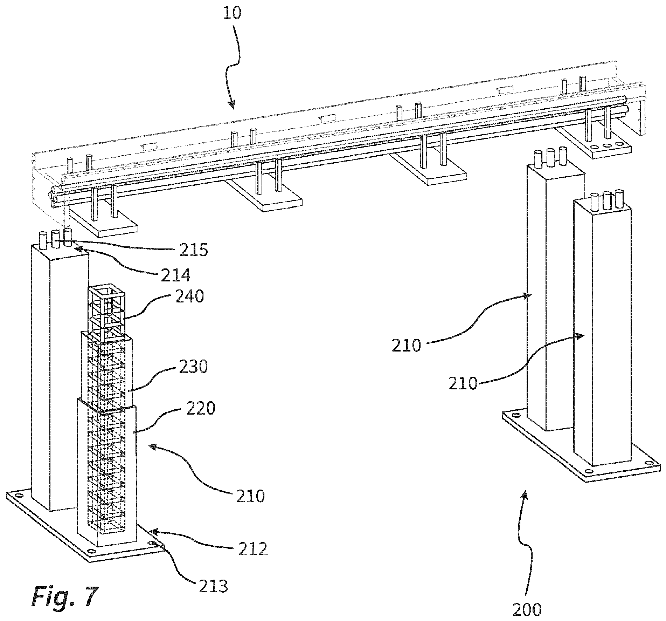

Fig. 7 zeigt eine Tragschiene 10 der beschriebenen Art in der Verwendung als Tragschiene 10 eines Robotersystems in Portalbauweise. Neben der genannten Tragschiene 10 ist daher eine Portalbasis 200 vorgesehen, die mehrere Portalsäulen 210 umfasst, welche an ihrem unteren Ende über einen metallischen Anschlussflansch 212 mit Befestigungsbohrungen 213 zur Festlegung am Hallenboden verfügen und an ihrem oberen Ende jeweils mit einem Anschlussflansch 214 versehen sind, der bei der dargestellten Ausführung durch drei Gewindestangen zur Befestigung der unteren Anschlussflansche 30 der Tragschiene 10 ausgebildet sind.

Da die Tragschiene von beispielsweise 3 m Länge aufgrund der Portalbauweise grundsätzlich durchbiegungsgefährdet ist, findet die beschriebene Variante mit einer Zugstruktur 70 mit Zugstangen 72 Verwendung.

Ebenso wie die Tragschiene 10 sind auch die Portalsäulen 210 der Portalbasis 200 als Verbund aus Beton und Metall hergestellt. Die Portalsäulen 210 weisen ein metallisches Hohlprofil 220 auf, welches in einem Innenbereich mit Beton 230 ausgegossen ist, wobei der Beton eine metallische Innenstruktur 240 umgibt. Es hat sich gezeigt, dass ein solcher Aufbau mit metallischem Hohlprofil und metallischer Innenstruktur sowie einem Betonkern optimale Voraussetzungen schafft, um gleichzeitig die erforderliche Stabilität und positive Dämpfungseigenschaften zu verursachen. Weiterhin erlauben der Beton und die metallische Innenstruktur die Verwendung vergleichsweise dünnwandiger Hohlprofile.

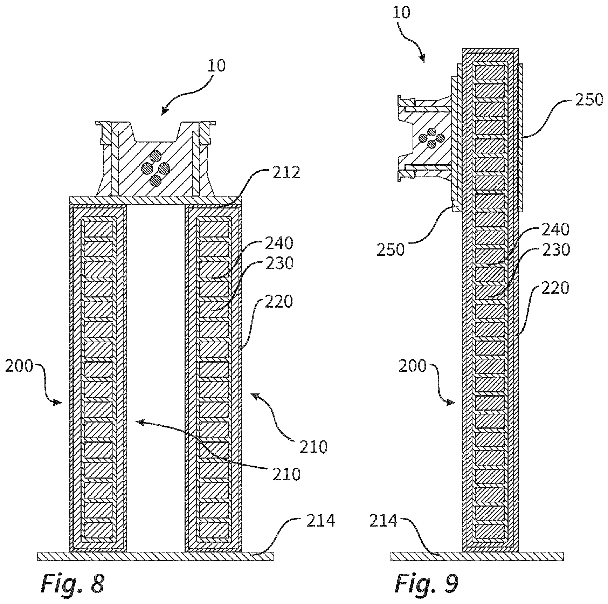

In einer Seitenansicht ist das System der Fig. 7 auch in Fig. 8 dargestellt, aus der sich ersehen lässt, wie die Portalsäulen 210 im Querschnitt aussehen. Abweichend von der dargestellten Variante ist es auch möglich, dass die metallische Innenstruktur 240 über eine Schweiß- oder Schraubverbindung unmittelbar mit den jeweiligen Hohlprofilen 220 verbunden ist.

Die Fig. 9 zeigt, dass je nach konkretem Anwendungsgebiet auch eine andere Ausrichtung der Tragschiene 10 zweckmäßig sein kann. Bei der Ausgestaltung der Fig. 9 sind an der Tragsäule beidseitig Metallplatten 250 vorgesehen, die in nicht näher dargestellter Weise miteinander verschraubt sind. Die linksseitige Metallplatte 250 ist weiterhin mit dem unteren Anschlussflansch 30 der Tragschiene 10 verschraubt.

## Patentansprüche

1. Tragschiene (10) für eine translativ verfahrbare Roboterplattform (120) mit den folgenden Merkmalen:
a. die Tragschiene (10) ist in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene (42) zur Führung der Roboterplattform (120) ausgebildet, und
b. die Tragschiene (10) weist in einem nach unten weisenden Teilabschnitt mindestens einen unteren metallischen Anschlussflansch (30) zur Befestigung der Tragschiene (10) auf einem Untergrund wie einem Hallenboden oder an einer Portalbasis (200) auf, und
c. die Tragschiene (10) weist in einem nach oben weisenden Teilabschnitt an einerAußenseite mindestens einen oberen metallischen Anschlussflansch (40) zur Anbringung der metallischen Führungsschiene und/oder unmittelbar die mindestens eine metallische Führungsschiene (42) auf,
**gekennzeichnet durch** die folgenden Merkmale:
d. die Tragschiene (10) verfügt über einen Tragstruktur (20) aus Beton,
e. die Tragschiene (10) verfügt über eine in die Tragstruktur (20) aus Beton eingebettete metallische Zugstruktur (70), die in Haupterstreckungsrichtung (A) unter Zugspannung steht.

2. Tragschiene (10) nach Anspruch 1 mit dem folgenden zusätzlichen Merkmal:
a. die Tragschiene (10) verfügt über eine in Haupterstreckungsrichtung (A) unter Druckspannung stehende metallische Druckstruktur (80).

3. Tragschiene (10) nach Anspruch 2 mit dem folgenden zusätzlichen Merkmal:
a. die Druckstruktur (80) weist eine die Außenfläche der Tragschiene (10) bildende Außenstruktur (82) auf,
insbesondere mit dem folgenden zusätzlichen Merkmal:
b. die Außendruckstruktur (82) wird durch ein Hohlprofil (84) gebildet.

4. Tragschiene (10) nach Anspruch 2 oder 3 mit dem folgenden zusätzlichen Merkmal:
a. die Zugstruktur (70) erstreckt sich über zumindest 60% der Länge der Tragstruktur, vorzugsweise über zumindest 80%.

5. Tragschiene (10) nach einem der Ansprüche 1 bis 4 mit dem folgenden zusätzlichen Merkmal:
a. die Zugstruktur (70) ist beidseitig endseitig mit quer zur Haupterstreckungsrichtung (A) erstreckten Druckplatten (60) verbunden und/oder
c. die Zugstruktur weist bezogen auf die Haupterstreckungsrichtung einen variablen Querschnitt auf.

6. Tragschiene (10) für eine translativ verfahrbare Roboterplattform (120) nach einem der vorstehenden Ansprüche mit mindestens einem der folgenden zusätzlichen Merkmalen:
a. die Tragstruktur (20) ist aus Zementbeton oder aus Polymerbeton hergestellt, und/oder
b. die Tragstruktur (20) ist aus Textilbeton hergestellt, und/oder
c. in den Beton der Tragstruktur (20) ist zur Verminderung der Masse mindestens ein Freibereich vorgesehen oder mindestens ein Block aus Kunststoff, insbesondere aus Polystyrol, eingebracht und/oder
d. der mindestens eine untere metallische Anschlussflansch (30) wird durch mindestens eine Bodenplatte (31) gebildet, die Bohrungen (32) zur Anbringung am Untergrund aufweist, wobei vorzugsweise eine Mehrzahl von zueinander beanstandeten Bodenplatten (31) vorgesehen ist und/oder
e. die Tragschiene (10) weist eine Länge von mindestens 3 m in Haupterstreckungsrichtung auf, insbesondere von mindestens 6 m.

7. Verfahrsystem (110) für einen Roboter (130) mit den folgenden Merkmalen:
a. das Verfahrsystem (110) weist mindestens eine Tragschiene (10) mit mindestens einer daran vorgesehenen Führungsschiene (42) auf und
b. das Verfahrsystem (110) weist mindestens eine Roboterplattform (120) auf, auf der bestimmungsgemäß ein Roboter (130) angeordnet wird,
**gekennzeichnet durch** das Merkmal:
c. die Tragschiene (10) ist nach einem der vorstehenden Ansprüche ausgebildet.

8. Portalbasis (200) eines Robotersystems zur Anbringung einer Tragschiene für eine translativ verfahrbare Roboterplattform mit den folgenden Merkmalen:
a. die Portalbasis (200) verfügt über eine Mehrzahl von Portalsäulen (210), und
b. die Portalsäulen (210) weisen mindestens einen unteren metallischen Anschlussflansch (212) zur Befestigung der Portalsäulen (210) auf einem Untergrund wie einem Hallenboden auf, und
c. die Portalsäulen (210) weisen mindestens einen oberen Anschlussflansche (214) zur Anbringung einer horizontal erstreckten Tragschiene (10) für eine translativ verfahrbare Roboterplattform auf,
**gekennzeichnet durch** die folgenden zusätzlichen Merkmale:
d. mindestens eine Portalsäule (210) verfügt über eine metallische Außenstruktur, die durch ein metallisches Hohlprofil (220) gebildet ist, und
e. ein vom Hohlprofil (220) umgebener Innenbereich ist zumindest zum überwiegenden Teil mit Beton (230) gefüllt, und
f. in den Beton (230) im Innenbereich ist eine metallische Innenstruktur (240) eingebettet.

9. Portalbasis (200) nach Anspruch 8 mit mindestens einem der folgenden zusätzlichen Merkmale:
a. die metallische Innenstruktur erstreckt sich mindestens über 60% der Länge des Hohlprofils, insbesondere über mindestens 80% der Länge, und/oder
b. die metallische Innenstruktur ist mit dem Hohlprofil unmittelbar verbunden, vorzugsweise über eine Schweißverbindung.

10. Portalbasis (200) nach Anspruch 8 oder 9 mit den folgenden zusätzlichen Merkmalen:
a. die metallische Innenstruktur weist mindestens ein in Haupterstreckungsrichtung ausgerichtetes Längssegment und eine Mehrzahl von sich in Querrichtung über das Längssegment erhebende Quersegmente auf, und/der
b. die metallische Innenstruktur weist eine Mehrzahl von in Haupterstreckungsrichtung ausgerichteten Längssegmenten auf, die miteinander über Quersegmente verbunden sind.

11. Robotersystem (100) mit einer Portalbasis (200) und einer durch die Portalbasis getragenen horizontalen Tragschiene (10) mit mindestens einem der folgenden Merkmalen:
a. die Tragschiene (10) ist nach einem der Ansprüche 1 bis 6 ausgebildet und/oder
b. die Portalbasis (200) ist nach einem der Ansprüche 8 bis 10 ausgebildet.

12. Robotersystem (100) nach Anspruch 11 mit dem folgenden zusätzlichen Merkmal:
a. das Robotersystem (100) umfasst einen auf der Roboterplattform (120) angebrachten Roboter (130).

13. Verfahren zur Herstellung einer Tragschiene (10) für eine translativ verfahrbare Roboterplattform (120) nach einem der Ansprüche 1 bis 6 mit den folgenden Merkmalen:
a. es werden mindestens ein unterer metallischer Anschlussflansch (30) und mindestens ein oberer metallischer Anschlussflansch (40) bzw. eine Führungsschiene (42) in eine Schalung (300) eingelegt oder auf die Schaltung (300) aufgelegt, und
b. es wird eine Zugstruktur (70) in die Schalung (300) eingelegt und endseitig ortsfest zu Wandungen der Schalung (300) festgelegt, so dass sie unter einer in Haupterstreckungsrichtung (A) der Schalung wirkenden Zugspannung steht, und
c. die Schalung (300) wird anschließend mit Beton ausgegossen, so dass hierdurch die Tragstruktur (20) gebildet wird, wobei die Zugstruktur (70) unter Zugspannung stehend in den Beton der Tragstruktur (20) eingebettet wird, und
d. nach zumindest partiellem Aushärten des Betons der Tragstruktur (20) wird die hierdurch hergestellte Tragschiene (10) aus der Schalung (300) entnommen, wobei die Zugspannung in der Zugstruktur (70) zumindest teilweise erhalten bleibt.

14. Verfahren zur Herstellung einer Tragschiene (10) für eine translativ verfahrbare Roboterplattform (120) nach einem der Ansprüche 1 bis 6 mit den folgenden Merkmalen:
a. es wird eine kombinierte metallische Zug- und Druckstruktur (70, 80) erstellt, die mindestens einen in einer Haupterstreckungsrichtung (A) unter Zug stehenden Strukturabschnitt (72) sowie mindestens einen in Haupterstreckungsrichtung (A) unter Druck stehenden Strukturabschnitt (82) aufweist, und
b. es wird eine Tragstruktur (20) aus Beton gegossen, in der zumindest der unter Zug stehende Strukturabschnitt (72) eingebettet ist.

15. Verfahren nach Anspruch 14 mit dem folgenden zusätzlichen Merkmal:
a. nach zumindest partiellem Aushärten des Betons der Tragstruktur (20) erfolgt eine Trennung der Zugstruktur von der Druckstruktur, wobei die Zugspannung in der Zugstruktur (70) zumindest teilweise erhalten bleibt.
